# EUROPÄISCHE PATENTSCHRIFT

(11) **EP 1 025 810 B1**
(45) Veröffentlichungstag und Bekanntmachung des Hinweises auf die Patenterteilung: **12.10.2005**
(21) Anmeldenummer: 99125062.2
(22) Anmeldetag: 16.12.1999
(51) Int. Cl.: A61C 13/20, B29C 33/38, B29C 39/40

(54) **Form zum Einbetten von Modellen in eine Einbettmasse zur Erstellung von Gussformen für Dentalwerkstücke**
Cast for embedding patterns in mould material for the production of moulds for dental workpieces
Moule pour enrober des modèles dans un matériau de moulage pour la production de moules pour pièces dentaires

(30) Priorität: 08.01.1999 DE 29900179 U; 16.06.1999 DE 29910525 U; 20.11.1999 DE 19955866
(43) Veröffentlichungstag der Anmeldung: 09.08.2000
(73) Patentinhaber: Dental Forschung Schleicher GmbH, 93339 Riedenburg (DE)
(72) Erfinder: Schleicher, Wolfgang, 93339 Riedenburg (DE)
(74) Vertreter: Graf, Helmut

(56) Entgegenhaltungen:
- DE-U- 8 519 112
- DE-U- 8 607 132
- FR-A- 2 624 000
- US-A- 1 970 261
- US-A- 4 749 020
- US-A- 5 183 095
- US-A- 5 360 052

## Beschreibung

Die Erfindung bezieht sich auf eine Form gemäß dem Oberbegriff des Patentanspruches 1.

Unter "Dental-Werkstücke" sind im Sinne der Erfindung insbesondere Zahnkronen, Zahnbrücken zu verstehen. Eine Einbettform zur Erstellung einer Gußform für derartige Dental-Werkstücke gemäß dem Obergriff des Patentanspruches 1 ist aus der DE 85 19 112 bekannt.

Ein grundsätzliches Problem einer derartigen Einbettform ist, dass die verwendeten Einbettmassen beim Aushärten sich erhitzen und expandieren, und zwar insbesondere auch dann, wenn bereits ein gewisser fester Zustand erreicht ist. Schon geringe Kräfte oder Zwänge, die auf die Einbettmasse ausgeübt werden, können diesen Expansionsprozess derart beeinflussen, dass der Expansionsprozess verstärkt in eine Richtung abläuft und dadurch eine Verformung des jeweiligen Modells stattfindet bzw. der als Gussform für das jeweilige Dental-Werkstück (Krone, Brücke usw.) gebildete Hohlraum nicht mehr die ursprünglich gewünschte Form aufweist.

Aufgabe der Erfindung ist es, eine Einbettform zu schaffen, bei der unter Beibehaltung der Genauigkeiten hinsichtlich der erstellen Gußformen eine unerwünschte Verformung des Modells und damit des Gussformhohlraumes vermieden werden kann.

Zur Lösung dieser Aufgabe ist eine Form entsprechend dem Patentanspruch 1 ausgebildet.

Bei der erfindungsgemäßen Form ist der Zuschnitt transparent bzw. durchsichtig ausgebildet und an der zylindrischen Umfangswand ist eine auf die Temperatur der Einbettmasse beim Aushärten ansprechende Anzeige vorgesehen.

Wenn die Einbettmasse eine bestimmte Temperatur erreicht hat, wird dies dem Benutzer über die Anzeige angezeigt und dieser kann die zylindrische Umfangswand vollständig entfernen.

Weiterbildungen der Erfindung sind Gegenstand der Unteransprüche.

Die Erfindung wird im Folgenden anhand der Figuren an einem Ausführungsbeispiel näher erläutert. Es zeigen:
- Fig. 1: in vereinfachter Darstellung und in Seitenansicht eine Einbettform gemäß der Erfindung;
- Fig. 2: die Form der Figur 1 im Längsschnitt;
- Fig. 3: das Bodenteil in Einzeldarstellung;
- Fig. 4: eine Draufsicht auf das Bodenteil der Einbettform der Figuren 1 und 2;
- Fig. 5: in einer Darstellung ähnlich Figur 4 eine weitere Ausführung der erfindungsgemäßen Form;
- Fig. 6: die Ausführung der Figur 5 in vereinfachter Seitenansicht.

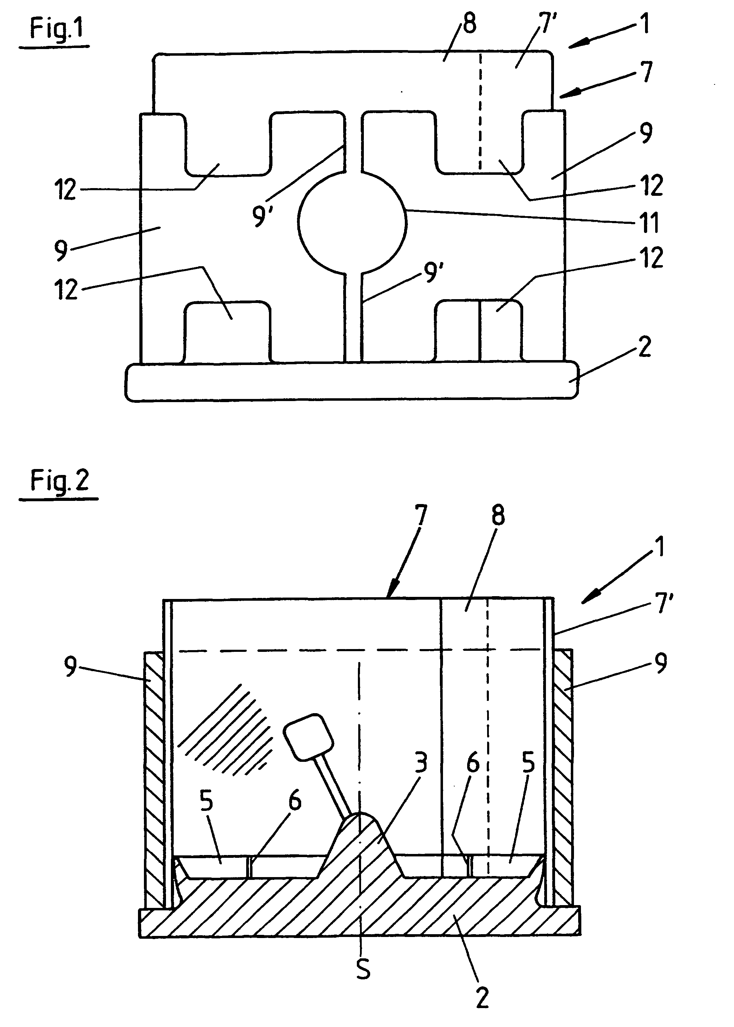

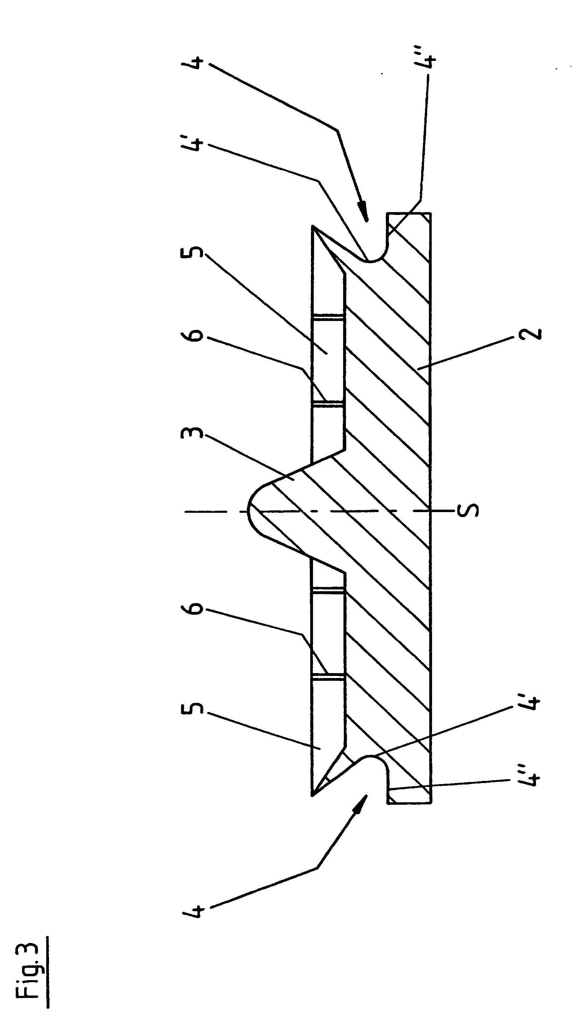

Die in den Figuren 1 - 4 dargestellte Einbettform 1 besteht u.a. aus einem Bodenteil 2, welches aus Hartgummi oder einem anderen elastischen Material kreisscheibenförmig hergestellt ist. Im mittleren Bereich besitzt das Bodenteil 2 einen an der Oberseite abgerundeten kegelstumpfförmigen Vorsprung 2, der konzentrisch zu einer Symmetrie- oder Mittelachse S des Bodenteils 2 ausgebildet ist. An der dem Vorsprung 3 aufweisenden Seite besitzt das Bodenteil 2 weiterhin radial gegenüber dem Vorsprung 3 nach außen versetzt eine kreisringförmige, die Symmetrieachse S konzentrisch umschließende Abstufung 4. Diese bildet eine die Symmetrieachse S konzentrisch umschließende kreiszylinderförmige Fläche 4' und eine daran anschließende ringförmige Fläche 4'', die in einer Ebene senkrecht zur Symmetrieachse S liegt, allerdings unterhalb der den Vorsprung aufweisenden Oberseite des Bodenteils 2. An der Abstufung 4 ist das Bodenteil 2 einstückig mit einer umlaufenden, die Symmetrieachse S konzentrisch umschließenden Dichtungslippe 5 hergestellt ist, die bei der für die Figur 3 gewählten Darstellung, d.h. von den übrigen Elementen der Einbettform abgenommenen Bodenteil 2 über die Fläche 4' vorsteht. Die Dichtungslippe 5 ist bei der dargestellten Ausführungsform mehrfach bei 6 unterbrochen bzw. eingeschnitten.

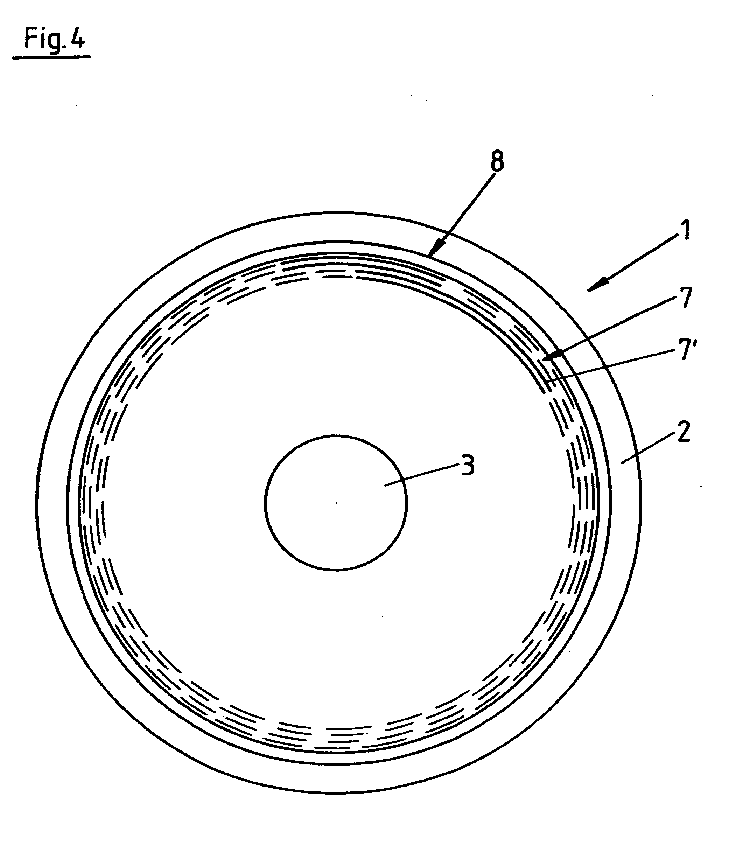

Die Einbettform 1 besteht weiterhin aus einer kreiszylinderförmigen Wandung 7, die in ihrem am Bodenteil 2 befestigten Zustand die Symmetrieachse S ebenfalls konzentrisch umschließt und die aus einem offenen Zuschnitt 7' einer durchsichtigen oder durchscheinenden Folie hergestellt ist, und zwar aus einem Kunststoffmaterial, welches eine nur gewisse Festigkeit bzw. Steifigkeit für die Wandung 7 gewährleistet. Wie in der Figur 4 angedeutet ist, ist der Zuschnitt 7' zu der Wandung 7 derart zusammengerollt, daß sich die beiden Enden des Zuschnittes bei 8 überlappen, ohne daß die Zuschnittenden miteinander verbunden sind, so daß eine Vergrößerung des Durchmessers des Innenraumes der Einbettform 1 möglich ist, ohne daß die Wandung 7 einer solchen Durchmesservergrößerung mit einer wesentlichen Gegenkraft entgegenwirkt.

Die Wandung 7 steht mit ihrem unteren Rand auf der Fläche 4" auf und liegt im Bereich des unteren Randes mit der Innenfläche gegen die Fläche 4' sowie auch gegen die Dichtungslippe 5 an, so daß ein dichter Abschluß erreicht ist. Durch die Einschnitte 6 kann die Dichtungslippe 5 einer Änderung des Innendurchmessers der Einbettform praktisch kraftlos folgen. Mit 9 ist eine äußere Manschette bezeichnet, die die Wandung 7 zumindest auf einem Teil der Höhe der Einbettform 1 umschließt und aus einem härteren Kunststoffmaterial hergestellt ist. Die Manschette 9 ist bei 10 durchgehend geschlitzt, so daß die Manschette 9 an den beiden durch die Schlitzung 10 gebildeten Ende 9' federnd soweit auseinander gebogen bzw. geöffnet werden kann, daß ein Aufsetzen sowie Abnehmen der Manschette 9 auf bzw. von der Wandung 7 möglich ist. Die Manschette 9 hält in ihrem aufgesetzten Zustand die Wandung 7 zusammen.

Um die Handhabung der Manschette 9 zu vereinfachen, ist diese an den Enden 9' mit jeweils einer eine Griff-Fläche bildenden Ausnehmung 11 versehen. Weiterhin ist die Manschette 9 mit verschiedenen Ausnehmungen bzw. Fenstern 12 versehen, durch die bei fertig zusammengesetzter Einbettform 1 der Innenraum der Einbettform auch von der Seite her sichtbar bleibt, und zwar durch die die Wandung 7 bildende Folie hindurch.

An dem kegelartigen Vorsprung 3 wird in bekannter Weise das Modell 13 einer Zahnkrone oder einer Brücke befestigt, und zwar über ein stegartiges Element 14, welches ebenfalls aus der Modelliermasse (Wachs) hergestellt ist und später den Gußkanal beim Gießen der Krone bzw. der Brücke bildet.

Die Verwendung der Einbettform erfolgt in der Weise, daß nach dem Zusammenfügen dieser Form 1 und der Anordnung des jeweiligen Modells 13 in den Innenraum der Einbettform die Einbettmasse von der offenen Oberseite her in die Einbettform eingebracht wird, wobei dieses Einbringen nicht nur von oben, sondern auch seitlich durch die fensterförmigen Öffnungen 11 und 12 beobachtet werden kann. Insbesondere kann auch beobachtet bzw. sichergestellt werden, daß die Einbettmasse optimal in den Hohlraum des Modells 13 einfließt, ohne daß hier Lufteinschlüsse verbleiben.

Wie die Figuren 1 und 2 zeigen, steht die Wandung 7 über den oberen Rand der Manschette 9 vor. Dies ermöglicht es auch besonders einfach, den Füllzustand der Einbettform mit der Einbettmasse zu kontrollieren, insbesondere auch zu verhindern, daß zuviel Einbettmasse in die Einbettform 1 eingebracht wird und dadurch über den oberen Rand fließt, was ein Öffnen der Einbettform nach dem Aushärten der Einbettmassen zumindest erschweren würde.

Bekanntermaßen sind die verwendeten Einbettmassen so ausgeführt, daß sie beim Aushärten, insbesondere aber auch noch dann, wenn beim Aushärten bereits ein gewisser fester Zustand erreicht ist, expandieren, um so durch Vergrößerung des von dem jeweiligen Modell 13 in der Einbettmasse geformten Formraumes die durch die Abkühlung bedingte Schrumpfung der aus Metall gegossenen Krone oder Brücke zu kompensieren. Bereits geringe Kräfte oder Zwänge können diesen Expansionsprozeß stören, und zwar beispielsweise in der Weise, daß bei einer Einschränkung oder Einengung des Expansionsprozesses durch die Wandung 7 der Expansionsprozeß verstärkt in Richtung der Symmetrieachse S stattfindet, wodurch die hergestellte Krone bzw. Brücke dann in dieser Achsrichtung zu große Abmessungen aufweist, während in den senkrecht hierzu verlaufenden Achsrichtungen die Abmessungen unter dem gewünschten Wert liegen.

Es hat sich gezeigt, daß durch die vorstehend beschriebene Ausbildung der Umfangswand sowie auch durch die Teilung der Dichtungslippe 5 die der Expansion der Einbettmasse entgegenwirkenden Kräfte oder Zwänge so klein gehalten werden, daß auch radial zur Symmetrieachse S die gewünschten Abmessungen für den durch das Modell 13 geformten Formraum mit hoher Genauigkeit eingehalten werden.

Wesentliche Bestandteile der Einbettform 1 sind somit die von dem Zuschnitt 7' aus durchsichtigem Kunststoff hergestellte zylindrische Umfangswand 7, die diese Umfangswand abstützende Manschette 9, das Bodenteil 2 mit der freistehenden, aber bei 6 mehrfach eingeschnittenen Dichtungslippe 5.

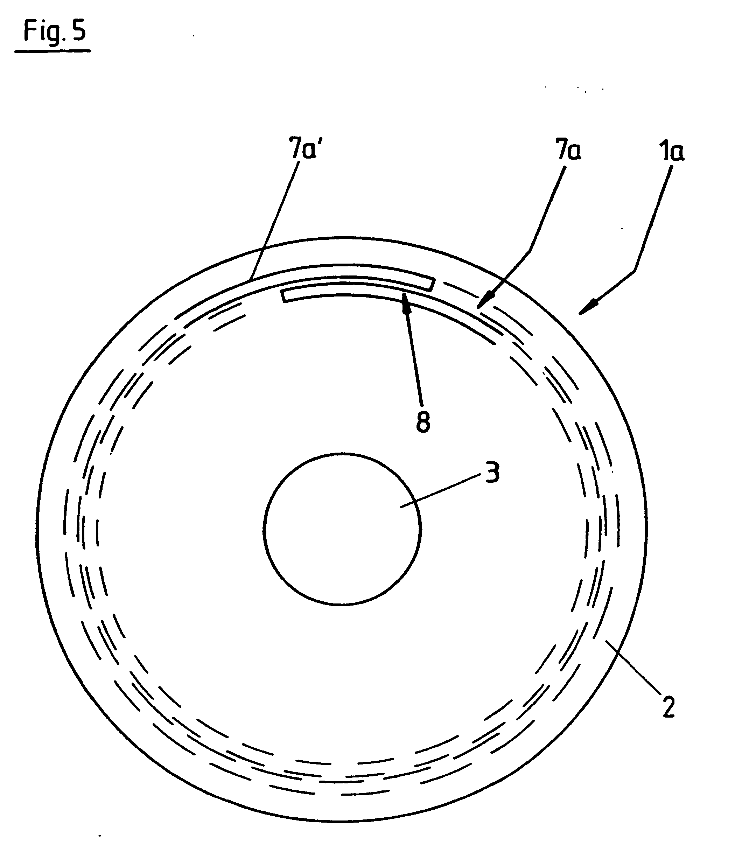

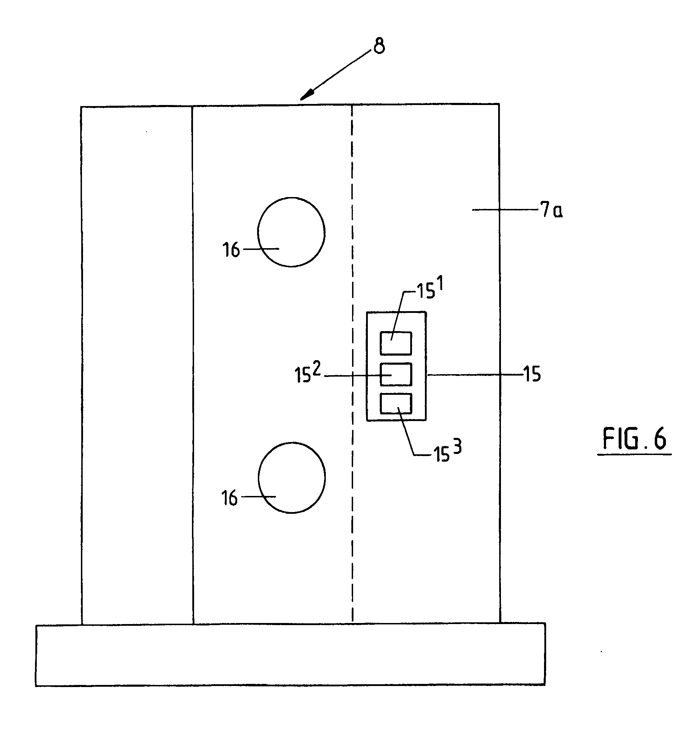

Die Figuren 5 und 6 zeigen eine weitere mögliche Ausführungsform, bei der die den Formraum umschließende Wand 7a wiederum aus dem lichtdurchlässigen Material hergestellt ist, wobei das Material aber so gewählt ist, daß die Wand 7a bereits die notwendige Festigkeit aufweist. Die Wand 7a ist wiederum so ausgeführt, daß sich der betreffende Zuschnitt 7a' überlappt, so daß beim Expandieren der verwendeten Einbettmasse eine Vergrößerung des Innendurchmessers des Forminnenraumes möglich ist, ohne daß durch ein Auseinanderklaffen des Zuschnitt 7a' die Wand 7a undicht wird. Durch die freistehende und mehrfach eingeschnittene Dichtungslippe 5 gibt auch diese bei dieser Ausführungsform wiederum beim Expandieren der Einbettmasse nach, so daß unerwünschte Verformungen in der hergestellten Form und damit bei dem hergestellten Dental-Werkstück wirksam vermieden sind.

Mit 15 ist in der Figur 6 eine Anzeige bezeichnet, die an dem Zuschnitt 7a vorgesehen ist und auf die Temperatur der Einbettmasse beim Abhärten anspricht. Diese Anzeige 15 ist beispielsweise von einer Flüssigkristalltemperaturanzeige gebildet, die bei der dargestellten Ausführungsform drei Felder 15¹, 15² und 15³ aufweist, die jeweils bei unterschiedlichen Temperaturen aktiviert werden und dann in unterschiedlichen Farben erscheinen, beispielsweise das Feld 15¹ in roter Farbe bei einer niedrigen Temperatur mit der Bedeutung, daß die Einbettform noch geschlossen gehalten werden muß, das Feld 15² in gelber Farbe einer etwas höheren Temperatur mit der Bedeutung, daß ein Öffnen der Einbettform möglichst bald erfolgen soll und das Feld 15³ in grüner Farbe mit der Bedeutung, daß nunmehr ein Öffnen der Einbettform umgehend erfolgen soll.

Die Anzeige 15 verhindert, daß durch ein zu frühes Öffnen der Einbettform und damit durch ein zu frühes Freigeben eine unkontrollierte Expansion der Einbettmasse erfolgt, die zu Rissen in der Einbettmasse bzw. in der hergestellten Gußform führt. Mit 16 sind in der Figur 6 noch zwei Klettverschlüsse bezeichnet, mit denen die sich überlappenden Enden im Bereich der Überlappung 8 miteinander verbunden sind, ohne daß die gewünschte Nachgiebigkeit der Wandung 7a verloren geht.

Die Erfindung wurde voranstehend an Ausführungsbeispielen beschrieben. Es versteht sich, daß Änderungen sowie Abwandlungen möglich sind, ohne daß dadurch der der Erfindung zugrundeliegende Erfindungsgedanke verlassen wird.

### Bezugszeichenliste

- 1, 1a: Einbettform
- 2: Bodenteil
- 3: Vorsprung
- 4: Abstufung
- 4', 4'': Fläche
- 5: Dichtungslippe
- 6: Einschnitt
- 7, 7a: Wandung
- 7', 7a': Zuschnitt aus durchsichtigem Kunststoff
- 8: Überlappung
- 9: Manschette
- 9': Ende
- 10: Schlitz
- 11, 12: Ausnehmung
- 13: Modell
- 14: stegartiger Abschnitt
- 15: Temperaturanzeige
- 15¹, 15², 15³: Feld
- 16: Klettverschluß

## Patentansprüche

1. Form zum Einbetten von Modellen in einer Einbettmasse zur Erstellung von Gussformen für Dental-Werkstücke, wie Kronen, Brücken, mit einem zumindest ein Modell aufnehmenden und mit der Einbettmasse auffüllbaren Formraum, der von einer zylindrischen Umfangswand (7, 7a) sowie von einem Bodenteil (2) verschlossen ist, wobei die Umfangswand von einem Zuschnitt (7', 7a') eines Kunststoff-Flachmaterials gebildet ist und sich der Zuschnitt (7', 7a') an zwei Enden zur Bildung einer geschlossenen Umfangswand überlappt, ohne dass die Enden miteinander verbunden sind,
**dadurch gekennzeichnet,**
**dass** der Zuschnitt (7', 7a') transparent bzw. durchsichtig ausgebildet ist, und dass an der zylindrischen Umfangswand (7, 7a) eine auf die Temperatur der Einbettmasse beim Aushärten ansprechende Anzeige (15) vorgesehen ist.

2. Form nach Anspruch 1,
**dadurch gekennzeichnet,**
**dass** die Umfangswand (7, 7a) aus einem Zuschnitt (7',7'a) einer transparenten bzw. durchsichtigen Kunststoff-Folie gebildet ist, und
**dass** zur Stützung der die Umfangswand bildenden Folie außen eine die Umfangswand umgebende Manschette (9) vorgesehen ist.

3. Form nach Anspruch 1 oder 2,
**dadurch gekennzeichnet,**
**dass** das Bodenteil (2) eine Dichtungslippe (5) aufweist, die zur Abdichtung des Übergangs zwischen dem Bodenteil und der Umfangswand (7) gegen die Innenfläche der Umfangswand anliegt, und
**dass** die Dichtungslippe (5) mehrfach geteilt bzw. eingeschnitten ist.

4. Form nach Anspruch 2 oder 3,
**dadurch gekennzeichnet,**
**dass** die Manschette (9) aus transparentem oder lichtdurchlässigem Material hergestellt ist.

5. Form nach Anspruch 2 oder 4,
**dadurch gekennzeichnet,**
**dass** die Manschette (9) Sichtfenster bildende Öffnungen oder Ausnehmungen (11, 12) aufweist.

6. Form nach einem der Ansprüche 2 bis 5,
**dadurch gekennzeichnet,**
**dass** die Manschette (9) als geschlitzter Kreiszylinder ausgeführt ist.

7. Form nach einem der Ansprüche 2 bis 6,
**dadurch gekennzeichnet,**
**dass** die Manschette (9) im Bereich von durch den Schlitz (10) gebildeten Enden jeweils mit einer eine Griff-Fläche bildenden Ausnehmung (11) versehen ist.

8. Form nach einem der Ansprüche 1 bis 7,
**dadurch gekennzeichnet,**
**dass** die Anzeige (15) von einer Flüssigkristalltemperaturanzeige gebildet ist.

9. Form nach Anspruch 8,
**dadurch gekennzeichnet,**
**dass** die Anzeige (15) drei Felder (15¹, 15², 15³) aufweist, die jeweils bei unterschiedlichen Temperaturen aktiviert werden und dann in unterschiedlichen Farben erscheinen.

10. Form nach Anspruch 9,
**dadurch gekennzeichnet,**
**dass** bei einer niedrigen Temperatur ein erstes Feld (15¹) in der Farbe Rot mit der Bedeutung erscheint, dass die Einbettform noch geschlossen gehalten werden muss,
**dass** bei einer etwas höheren Temperatur ein zweites Feld (15²) in gelber Farbe mit der Bedeutung erscheint, dass ein Öffnen der Form möglichst bald erfolgen soll und
**dass** ein drittes Feld (15³) in grüner Farbe mit der Bedeutung erscheint, dass nunmehr ein Öffnen der Einbettform umgehend erfolgen soll.

## Claims

1. Mould for embedding models in an embedding compound for producing casting moulds for dental work pieces such as crowns and bridges, with a mould space which accommodates at least one model and which can be filled up with the embedding compound, and which is closed by a cylindrical peripheral wall (7, 7a) as well as a base part (2), wherein the peripheral wall is formed by a blank (7', 7a') made of a synthetic flat material, and the blank (7', 7a') overlaps at two ends to form a closed peripheral wall, without the ends being joined to one another,
**characterised in that**
the blank (7', 7a') is designed to be transparent or translucent, and that provided on the cylindrical peripheral wall (7, 7a) is a display (15) that reacts to the temperature of the embedding compound during curing.

2. Mould according to claim 1, **characterised in that** the peripheral wall (7, 7a) is formed by a transparent or translucent synthetic foil, and that to support the foil forming the peripheral wall, a cuff (9) that surrounds the peripheral wall is provided on the outside.

3. Mould according to claim 1 or 2, **characterised in that** the base part (2) has a sealing lip (5) which rests against inner face of the peripheral wall in order to seal off the transition between the base part and the peripheral wall (7), and that the sealing lip (5) is divided or notched several times.

4. Mould according to claim 2 or 3, **characterised in that** the cuff (9) is manufactured from transparent or translucent material.

5. Mould according to claim 2 or 4, **characterised in that** the cuff (9) has openings or clearances (11, 12) that form inspection windows.

6. Mould according to one of the claims 2 to 5, **characterised in that** the cuff (9) is executed as a slit circular cylinder.

7. Mould according to one of the claims 2 to 6, **characterised in that** in the area of the ends formed by the slit (10), the cuff (9) is respectively equipped with a clearance (11) that forms a grip surface.

8. Mould according to one of the claims 1 to 7, **characterised in that** the display (15) is formed by a liquid crystal temperature display.

9. Mould according to claim 8, **characterised in that** the display (15) has three fields (15¹, 15², 15³) that are activated respectively at different temperatures and then appear in different colours.

10. Mould according to claim 9, **characterised in that** at a low temperature, a first field (15¹) appears in the colour red, meaning that the embedding mould must still be held closed; that at a somewhat higher temperature a second field (15²) appears in the colour yellow, meaning that the mould must be opened soon; and that a third field (15³) appears in the colour green, meaning that the embedding mould should now,be opened immediately.

## Revendications

1. Moule pour enrober des modèles dans un matériau de moulage pour la production de moules pour pièces dentaires comme des couronnes, des bridges, comprenant un espace de moulage accueillant au moins un modèle et pouvant être rempli avec le matériau de moulage, qui est fermé par une paroi périphérique (7, 7a) cylindrique ainsi que par une pièce de fond (2), la paroi périphérique étant formée par une coupe (7', 7a') d'un matériau plat synthétique et la coupe (7', 7a') se recouvrant à deux extrémités pour former une paroi périphérique fermée sans que les extrémités soient reliées l'une à l'autre, **caractérisé en ce que** la coupe (7', 7a') est configurée de manière transparente ou encore limpide et **en ce qu'**un affichage (15) réagissant, lors du durcissement, à la température du matériau de moulage est prévu sur la paroi périphérique (7, 7a) cylindrique.

2. Moule selon la revendication 1, **caractérisé en ce que** la paroi périphérique (7, 7a) est formée d'une coupe (7', 7a') d'une feuille de matière synthétique transparente ou encore limpide et **en ce qu'**un manchon (9) entourant la paroi périphérique est prévu pour soutenir la feuille formant la paroi périphérique.

3. Moule selon la revendication 1 ou 2, **caractérisé en ce que** la pièce de fond (2) présente une lèvre d'étanchéité (5) qui repose contre la surface intérieure de la paroi périphérique pour étancher la transition entre la pièce de fond et la paroi périphérique (7) et **en ce que** la lèvre d'étanchéité (5) est divisée ou encore entaillée plusieurs fois.

4. Moule selon la revendication 2 ou 3, **caractérisé en ce que** le manchon (9) est fabriqué en matériau transparent ou translucide.

5. Moule selon la revendication 2 ou 4, **caractérisé en ce que** le manchon (9) présente des ouvertures ou des évidements (11, 12) formant des fenêtres.

6. Moule selon une des revendications 2 à 5, **caractérisé en ce que** le manchon (9) est configuré comme un cylindre circulaire fendu.

7. Moule selon une des revendications 2 à 6, **caractérisé en ce que** le manchon (9) est chaque fois pourvu, dans la région des extrémités formée par la fente (10), d'un évidement (11) formant une surface de préhension.

8. Moule selon une des revendications 2 à 7, **caractérisé en ce que** l'affichage (15) est formé par un affichage de température à cristaux liquides.

9. Moule selon la revendication 8, **caractérisé en ce que** l'affichage (15) présente trois champs (15¹, 15², 15³) qui sont respectivement activés à des températures différentes et apparaissent alors dans des couleurs différentes.

10. Moule selon la revendication 9, **caractérisé en ce que** à une basse température, un premier champ (15¹) apparaît dans la couleur rouge avec la signification que le moule d'enrobage doit encore être maintenu fermé, **en ce qu'**à une température un peu plus élevée, un deuxième champ (15²) apparaît en couleur jaune avec la signification qu'une ouverture du moule devra bientôt avoir lieu et **en ce qu'**un troisième champ (15³) apparaît en couleur verte avec la signification que désormais une ouverture du moule d'enrobage doit avoir lieu immédiatement.
